(19) Europäisches Patentamt
European Patent Office
Office européen des brevets

(11) EP 1 740 006 B1

(12) EUROPEAN PATENT SPECIFICATION

(45) Date of publication and mention
of the grant of the patent:
**09.01.2008 Bulletin 2008/02**

(51) Int Cl.:
*H04Q 7/38* (2006.01)   *H04Q 7/36* (2006.01)

(21) Application number: **06013272.7**

(22) Date of filing: **27.06.2006**

(54) **Dynamic channel allocation method in an OFDMA mobile communication system**

Verfahren zur dynamischen Kanalzuteilung in einem OFDMA Mobilkommunikationssystem

Procédé pour l'attribution dynamique de canal dans un système de communication mobile OFDMA

(84) Designated Contracting States:
**DE FR GB IT SE**

(30) Priority: **27.06.2005 KR 20050055984**

(43) Date of publication of application:
**03.01.2007 Bulletin 2007/01**

(73) Proprietor: **Samsung Electronics Co., Ltd.**
**Suwon-si, Gyeonggi-Do (KR)**

(72) Inventors:
• **Cho, Myeon-Gyun**
**Yeongtong-gu**
**Suwon-si**
**Gyeonggi-do (KR)**
• **Kwun, Jong-Hyung**
**Yeongtong-gu**
**Suwon-si**
**Gyeonggi-do (KR)**
• **Cho, Sung-Hyun**
**Yeongtong-gu**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**WO-A-97/13338**      **US-A1- 2003 169 681**

• **SEOKHYUN YOON ET AL: "Orthogonal frequency division multiple access with an aggregated sub-channel structure and statistical channel quality measurement" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1023-1027, XP010786777 ISBN: 0-7803-8521-7**
• **SEOKBYUN YOON ET AL: "System level performance of OFDMA forward link with proportional fair scheduling" PERSONAL, INDOOR AND MOBILE RADIO COMMUNICATIONS, 2004. PIMRC 2004. 15TH IEEE INTERNATIONAL SYMPOSIUM ON BARCELONA, SPAIN 5-8 SEPT. 2004, PISCATAWAY, NJ, USA,IEEE, vol. 2, 5 September 2004 (2004-09-05), pages 1384-1388, XP010754054 ISBN: 0-7803-8523-3**

## Description

The present invention generally relates to an Orthogonal Frequency Division Multiple Access (OFDMA) mobile communication system and, more particularly, to a method of sending feedback information for dynamic channel allocation and allocating resources based on the feedback information.

Along with the sophistication and diversification of society structures, demands for mobile communications are drastically increasing. Yet, the demands cannot be fulfilled because of limited frequency resources available for mobile communications. In this context, channel allocation for efficient use of frequency resources has emerged as a critical issue.

Typically in a mobile communication system, a Base Station (BS) is responsible for resource allocation and a Mobile Station (MS) sends or receives data using resources allocated by the BS. The BS takes into account a current channel status and frequency reuse for optimized resource allocation.

There are two main channel allocation techniques in the mobile communication system: Fixed Channel Assignment (FCA) and Dynamic Channel Assignment (DCA).

Due to a fixed allocation of channels in each BS, the FCA offers the benefit of a simple system control and is accordingly widely adopted. The DCA effectively utilizes limited radio frequency channels in time and space. It seeks to increase system capacity through increased efficiency of frequency use.

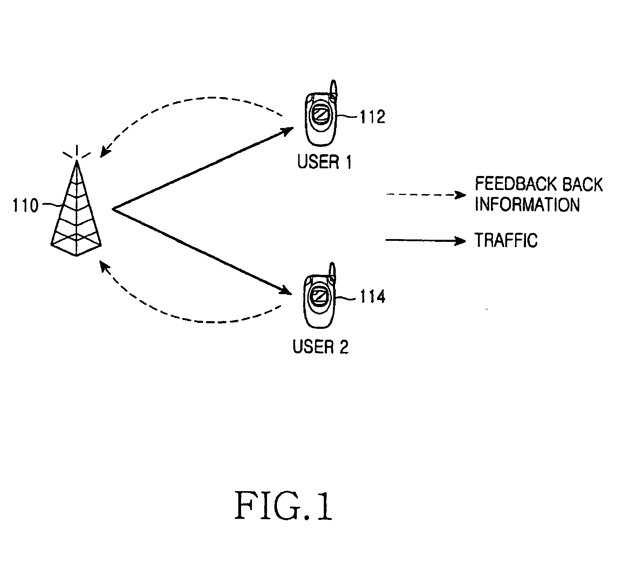

FIG 1 conceptually illustrates a typical communication procedure, especially on the downlink in the mobile communication system.

Referring to FIG 1, a BS 110 sends data to MSs 112 and 114 using resources individually allocated to them. The MSs 112 and 114 receive the data from the BS 110 and measure current channel statuses. The MSs 112 and 114 then feed back the current channel status information to the BS 110. The BS 110 allocates resources to the MSs 112 and 114 based on the current channel status information.

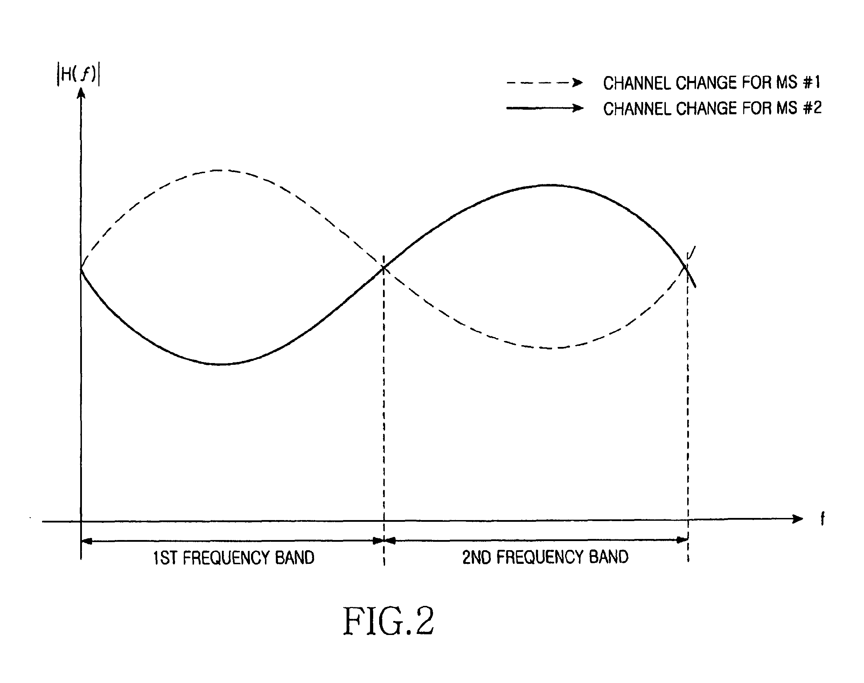

FIG 2 illustrates a typical resource allocation in an OFDMA mobile communication system.

Referring to FIG 2, a first MS (MS #1) experiences a channel change with a relatively good channel quality in a first frequency band rather than in a second frequency band. In contrast, a second MS (MS #2) experiences a channel change with a relatively good channel quality in the second frequency band rather than in the first frequency band. Thus, MS # 1 and MS #2 have good channel quality in the first and second frequency bands, respectively. The channel qualities of the MSs in the frequency bands are known from feedback information from them.

Therefore, allocation of a frequency band offering good channel quality to each MS is an optimum channel allocation. Preferably, the first frequency band is allocated to MS #1 and the second frequency band to MS #2.

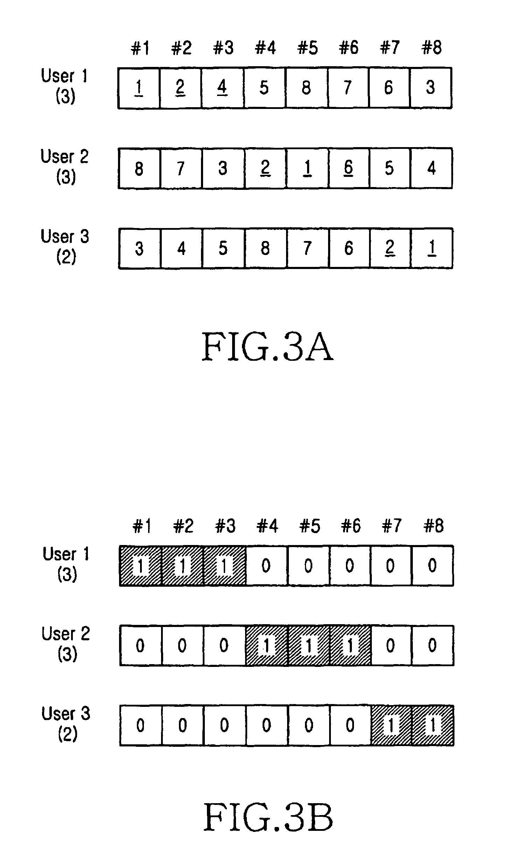

FIGs. 3A and 3B illustrate a DCA in a conventional OFDMA mobile communication system. The DCA is carried out taking into account a current channel environment only. A total frequency band is divided into eight subchannels and channel quality is fed back on a subchannel-by-subchannel basis.

A first user (User 1) and a second user (User 2) request allocation of three subchannels, and a third user (User 3) requests allocation of two subchannels. Each user measures the channel quality of each subchannel and reports the channel quality measurement. In the illustrated case of FIG 3A, as the total frequency band is divided into eight subchannels, the channel quality information requires 3 bits per subchannel on the assumption that the channel quality information indicates the channel quality ranking of each subchannel. Hence, 24 channel quality report bits are taken to report the channel quality of the total frequency band.

The OFDMA mobile communication system typically divides a total frequency band into 62 subchannels. To report channel quality, each MS uses six bits per channel. This means that a total of 384 bits are needed to report the channel quality of the total frequency band.

The BS allocates resources to each MS according to the channel quality ranking reported by the MSs. That is, the BS allocates a subchannel with the best channel quality to each MS. A first subchannel is allocated to User 1, a fifth channel to User 2, and an eighth channel to User 3.

Then the second best subchannels are allocated to the users. Thus, a second subchannel is allocated to User 1, a fourth subchannel to User 2, and a seventh subchannel to User 3. Now, while the eight subchannel is supposed to be allocated to User 1, it has already been allocated to User 3. Hence, the next best subchannel, i.e. a third subchannel is allocated to User 1. As the third, eighth and seventh subchannels have already been allocated, a sixth subchannel is allocated to User 2. As the requested two subchannels have been allocated to User 3, there is no need for allocating an additional subchannel to User 3.

FIG 3B illustrates the DCA results for each MS. The first, second, and third subchannels are for User 1, the fourth, fifth and sixth subchannels for User 2, and the seventh and eighth subchannels for User 3.

The best resource allocation is an optimum resource distribution with a minimized amount of feedback information in the mobile communication system. However, the conventional resource allocation method requires a large amount of feedback information since information about sub-channel whose channel status is measured is fed back. Moreover, allocation of resources to each MS based on the feedback information increases complexity.

The paper titled "Orthogonal Frequency Division Multiple Access with an Aggregated Sub-channel Structure and Statistical Channel Quality Measurement" S. Yoon et alia, IEEE 0-7803-8521-7/04, refers to a reduction of reverse-link overheads for CQI feedback. In this context, an aggregated sub-channel structure is discussed where a set of adjacent sub-carriers are tied-up to a sub-channel to be used as a unit of user-multiplexing and the corresponding power rate at allocation. Modelling the SNR distribution over the bandwidth of a sub-channel as Ricean, the general quality of a sub-channel is summarized with the mean and variance of channel gain envelop provided by noise standard deviation. A generalized two-step channel/resource allocation algorithm is suggested which uses the two statistical measurements, and analyzes the spectra efficiency of the OFDMA system in terms of average frequency utilization. A perfect knowledge of the channel conditions of each sub-carrier is required, i.e. CQI for every sub-carrier of every user have to be reported to the base station. In time varying fading channels, the CQI have to be frequently reported and sometimes the amount of CQI may be prohibitive, especially when intending to support high-speed mobiles. As a way of reducing this prohibitive CQI feedback, an aggregated sub-channel structure is considered, which consists of a set of adjacent sub-carriers and is used as the unit of CQI measurement, dynamic channel allocation and power backlash rate assignment.

The present invention has been designed to substantially solve at least the above problems and/or advantages and to provide at least the advantages below.

It is the object of the present invention to provide an improved method for sending feedback information for dynamic channel allocation and allocating resources based on the feedback information.

This object is solved by the subject matter of the independent claims.

Preferred embodiments are defined by the dependent claims.

Accordingly, the present invention enables minimizing the amount of feedback information used for resource allocation, sending information indicating a change in channel gain for each channel status measuring interval as feedback information, allocating resources based on feedback information indicating a change in channel gain for each channel status measuring interval, accumulating channel gain variations from the previous channel status measuring intervals to each channel status measuring interval and allocating resources to an MS based on the accumulation values, allocating resources based on a time-variant channel gain, and allocating resources based on the average of a previous channel gain and a current channel gain.

The present invention also enables weighting channel gains at different points of time with different weighting factors according to the reliabilities of the channel gains, averaging the weighted channel gains, and allocating resources based on the average, feeding back channel variations and channel gain variations measured at channel status measuring points distributed across a total frequency band, and allocating resources to MSs in the order from the best channel status.

According to one aspect of the present invention, in a method of transmitting feedback information in a mobile communication system, a total frequency band is divided into a first frequency band and a second frequency band with respect to a frequency being set as a reference point. Channel gains are measured at channel status measuring points in the first and second frequency bands. Channel status bit values are determined for the channel status measuring points according to channel gain changes at the channel status measuring points and reported as feedback information to a BS.

According to another aspect of the present invention, in a method of allocating resources in a mobile communication system, channel status bit values of channel status measuring points are received as feedback information from an MS. A total frequency band is divided into a first frequency band and a second frequency band with respect to a frequency being set as a reference point and the accumulation value of channel status bit values at each of the channel status measuring points is calculated separately in the first and second frequency bands. Resources are allocated in a descending order of the accumulation values. Here, the accumulation value is calculated by summing the channel status bit value of at least one channel status measuring point between the reference point and the each channel status measuring point, and adding the channel status bit value of the each channel status measuring point to the sum.

The present invention will become more apparent from the following detailed description when taken in conjunction with the accompanying drawings in which:

FIG 1 illustrates a typical communication procedure in a mobile communication system;
FIG. 2 illustrates a typical resource allocation in an OFDMA mobile communication system;
FIGs. 3A and 3B illustrate a DCA in a conventional OFDMA mobile communication system;
FIG 4 illustrates an exemplary feedback information generation and resource allocation based on feedback information according to the present invention;
FIG 5 is a flowchart illustrating a control operation for generating feedback information in an MS according to the present invention;
FIG 6 is a flowchart illustrating an exemplary control operation for determining the channel status bit values in the procedure illustrated in FIG 5;
FIG 7 is a flowchart illustrating a control operation for resource allocation in a BS according to the present invention;
FIG 8 illustrates resource allocation based on the average of feedback information received at a plurality of points of time according to the present invention;

FIG 9 is a diagram illustrating improvement of channel gain through averaging of feedback information;

FIG 10 is a flowchart illustrating a control operation for resource allocation in the BS according to the present invention;

FIG 11 illustrates a principle of the present invention;

FIG 12 is a flowchart illustrating an operation for sending feedback information in the MS according to the present invention;

FIG 13A illustrates resource allocation to a plurality of MSs in a random order;

FIG 13B illustrates resource allocation based on resource ordering;

FIG 14 is a graph comparing a resource allocation according to the present invention with a resource allocation without ordering; and

FIG 15 illustrates simulation results according to the present invention.

Preferred embodiments of the present invention will be described herein below with reference to the accompanying drawings. In the following description, well-known functions or constructions are not described in detail since they would obscure the invention in unnecessary detail.

The present invention will be described on the assumption that a channel status measuring interval is a subchannel while it is clear to those skilled in the art that the channel status measuring period can be set freely.

The present invention is intended to provide a method of minimizing feedback information for resource allocation in a BS and a method of allocating resources optimally based on the feedback information in a plurality of embodiments.

First, second and third embodiments of the present invention will be described sequentially.

In accordance with the first embodiment of the present invention, information indicating channel variations measured at channel status measuring points set across a total frequency band is fed back to thereby reduce the amount of feedback information. At each current channel status measuring point, channel variations from the previous channel status measuring time points to the current channel status measuring are accumulated, and resources that are considered to have good channel quality according to the accumulation values are first allocated.

In accordance with the second embodiment of the present invention, channel status bit values at different points of time for each channel status measuring point are calculated according to the first embodiment of the present invention and then averaged. Resources are allocated according to the averages.

In accordance with the third embodiment of the present invention, a channel gain change in a predetermined frequency area, as well as a channel variation at each channel status measuring point, is fed back.

Finally, an efficient resource allocation method based on feedback information received from MSs will follow the above embodiments of the present invention.

According to the first embodiment of the present invention, an MS compares a channel gain measured at each current channel status measuring point (hereinafter, referred to as a measuring point) with that measured at its previous measuring point over a total frequency band. A channel status bit value for the current measuring point depends on whether the channel gain is increased or decreased. Then the MS reports the channel status bit values of all measuring points distributed over the total frequency band as feedback information to a BS. The measuring points are divided into two parts with respect to a predetermined reference point in the total frequency band. The reason for setting the reference point is that a reference channel gain is used to determine channel status bit values for the other measuring points. Predetermined frequencies in the total frequency band are designated as the measuring points.

The channel gain of the reference point is set to 0, for example. If the channel gain of a measuring point is higher than that of the previous measuring point, the channel status bit value of the measuring point is determined to be +1. In the case of a decrease in the channel gain, the channel status bit value is determined to be -1. When needed, the MS encodes the channel status bit value to a binary value, prior to transmission.

The BS receives the channel status bit values of all measuring points as feedback information from each MS. For each MS, the BS then separately accumulates the channel status bit values in the two parts defined with respect to the reference point. The BS allocates resources to the MS by ordering the accumulation values.

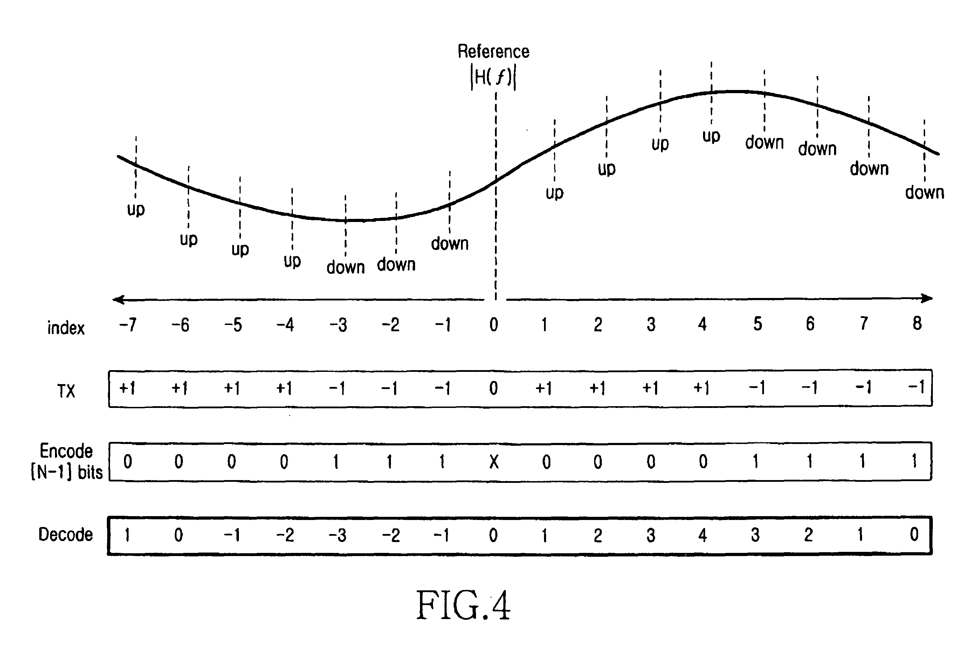

FIG 4 illustrates feedback information generation and resource allocation based on feedback information according to the first embodiment of the present invention. In the illustrated case of FIG 4, 16 measuring points are defined over a total frequency band.

A certain frequency is designated as a reference point, and the index of the reference point is set to 0. The total frequency band is divided into two frequency bands with reference to the reference point, where the lower and higher frequency bands are referred to as "first and second frequency bands", respectively.

The measuring points in the first frequency band are indexed with lower indexes as they are farther from the reference point, e.g. -1 to -7, and the measuring points in the second frequency band are indexed with higher indexes as they are farther from the reference point, e.g. 1 to 8. The measuring points are defined as points where a channel gain is measured, and for which a channel status bit is decided using the channel gain.

Referring to FIG 4, the MS measures channel gains at the measuring points in the total frequency band and sets the channel status bit value $b_{ref}$ of the reference point to 0.

Then the MS measures channel status separately in the first and second frequency bands. That is, the MS determines a channel status bit value for each measuring point according to changes in channel gain in the first and second frequency bands by comparing the channel gain of the measuring point with that of the previous measuring point. -1 or +1 is available as a channel status bit value. In the case of a channel gain decrease from the previous measuring point to the current measuring point, the channel status bit value of the current measuring point is -1. In the case of a channel gain increase, the channel status bit value is +1.

In channel status measuring at the measuring points in the first frequency band, the MS first compares the channel gain of a measuring point with index -1 (measuring point #-1) with that of the reference point. Since the channel gain is decreased from that of the reference point, the channel status bit value of measuring point #-1 is set to -1. In the same manner, the MS sets the channel status bit values of measuring points #-2 and #-3 to -1s because the channel gain decreases at these points. The change in gain continuously increases at measuring points #-4 to #-7. Therefore, the MS sets the channel status bit values of the measuring points to +1s.

In channel status measuring at the measuring points in the second frequency band, the MS first compares the channel gain of the reference point with that of measuring point #1. Since the channel gain is increased from that of the reference point, the channel status bit value of measuring point #1 is set to +1. In the same manner, the MS sets the channel status bit values of measuring points #2, #3 and #4 to +1s because the channel gain increases at these points. The change in gain continuously decreases at measuring points #5 to #8. Therefore, the MS sets the channel status bit values of the measuring points to -1 s.

Therefore, feedback information representing the channel status bit values in the total frequency band is given as "+1, +1, +1, +1, -1, -1, -1, 0, +1, +1, +1, +1, -1, -1, -1, - 1". The MS encodes the feedback information prior to transmission and the resulting binary-bit feedback information is "0, 0, 0, 0, 1, 1, 1, X, 0, 0, 0, 0, 1, 1, 1, 1".

The BS decodes the received feedback information by changing the binary bits to - 1s or +1s. After acquiring the channel status bit values before encoding in the MS, the BS separately calculates an accumulation value at each measuring point in the first and second frequency bands.

The accumulation values of the measuring points in the first frequency band are calculated as shown in Table 1 below.

Table 1

| Index | Channel status bit value | Accumulation value |
|---|---|---|
| 0 | 0 | 0 |
| -1 | -1 | -1 |
| -2 | -1 | -2 |
| -3 | -1 | -3 |
| -4 | +1 | -2 |
| -5 | +1 | -1 |
| -6 | +1 | 0 |
| -7 | +1 | 1 |

The accumulation values of the measuring points in the second frequency band are calculated as shown in Table 2 below.

Table 2

| Index | Channel status bit value | Accumulation value |
|---|---|---|
| 0 | 0 | 0 |
| 1 | +1 | 1 |
| 2 | +1 | 2 |
| 3 | +1 | 3 |
| 4 | +1 | 4 |
| 5 | -1 | 3 |

(continued)

| Index | Channel status bit value | Accumulation value |
|-------|--------------------------|--------------------|
| 6 | -1 | 2 |
| 7 | -1 | 1 |
| 8 | -1 | 0 |

The BS allocates resources to the MS in a descending order of accumulation value. Thus, the BS allocates frequency bands with bold indexes in Tables 1 and 2 to the MS.

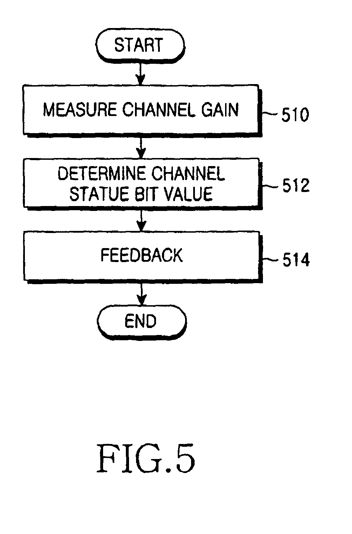

FIG. 5 is a flowchart illustrating a control operation for generating feedback information in the MS according to the first embodiment of the present invention.

Referring to FIG 5, the MS measures a channel gain at each measuring point in the total frequency band in step 510 and determines a channel status bit value for the measuring point by comparing the channel gain of the measuring point with that of the previous measuring point in step 512. If the channel gain increases at the measuring point, the channel status bit value is +1, and if the channel gain decreases at the measuring point, the channel status bit value is -1.

After determining channel status bit values for all measuring points, the MS feeds back the channel status bit values to the BS in step 514.

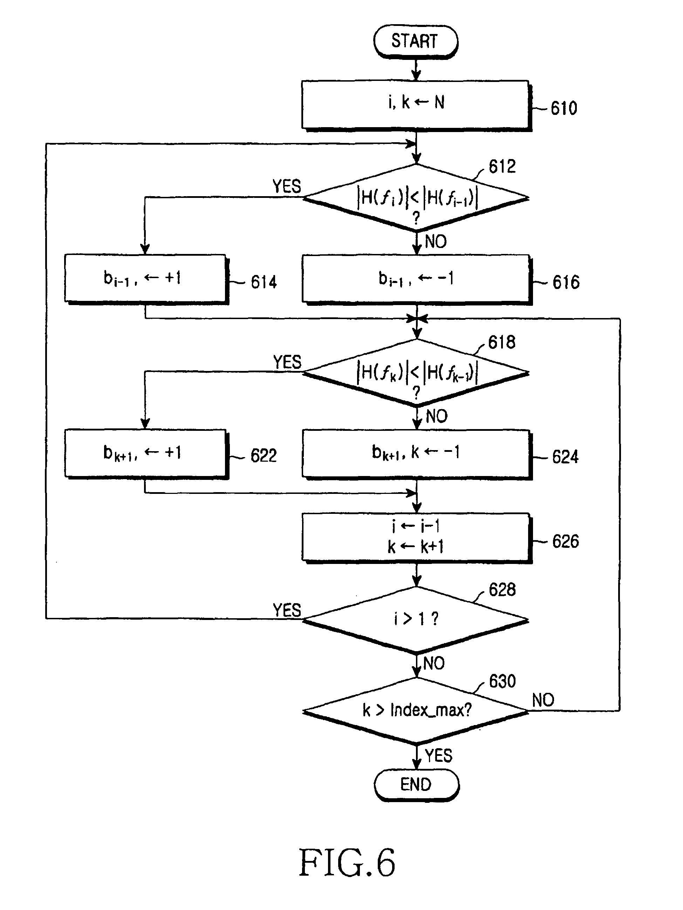

FIG 6 is a flowchart illustrating an exemplary control operation for determining the channel status bit values in the procedure illustrated in FIG 5.

Referring to FIG 6, the MS sets variables i and k representing measuring point indexes to n representing the index of the reference point in step 610. In steps 612 to 616, the MS determines channel status bit values for the measuring points in the first frequency band.

Specifically, the MS compares the channel gain of the current measuring point with that of the previous measuring point, i.e. compares the channel gain $|H(f_i)|$ of an $i^{th}$ measuring point (the reference point at first) with the channel gain $[H(f_{i-1})|$ of an $(i-1)^{th}$ measuring point in step 612.

If $|H(f_i)|<|H(f_{i-1})|$, the channel status bit value $b_{i-1}$, of the $(i-1)^{th}$ measuring point is determined to be +1 in step 614. If $|H(f_i)|≥|H(f_{i-1})|$, $b_{i-1}$ is -1 in step 616.

In steps 618 to 624, the MS determines channel status bit values for the measuring points in the second frequency band.

Specifically, the MS compares the channel gain of the current measuring point with that of the previous measuring point, i.e. the channel gain $|H(f_{k+1})|$ of a $(k+1)^{th}$ measuring point with the channel gain $|H(f_k)|$ of a $k^{th}$ measuring point (the reference point at first) in step 618.

If $|H(f_k)|<|H(f_{k+1})|$, the channel status bit value $b_{k+1}$ of the $(k+1)^{th}$ measuring point is determined to be +1 in step 622. If $|H(f_k)|≥|H(f_{k+1})|$, $b_{k+1}$ is -1 in step 624.

The MS decreases i by 1 and increases k by 1 in step 626 and compares the increased i with 1 in order to determine whether a channel status bit value has been determined for every measuring point in the first frequency band in step 628.

If i is greater than 1, the MS repeats steps 612 to 616 to determine a channel status bit value for the next measuring point in the first frequency band. The MS also repeats steps 618 to 624 to determine a channel status bit value for the next measuring point in the second frequency band.

On the contrary, if i is equal to or less than 1, the MS compares k with a maximum index (index_max) in order to determine whether a channel status bit value has been determined for every measuring point in the second frequency band in step 630.

If k is equal to or less than index_max, the MS repeats steps 618 to 624. If k is greater than index_max, the MS ends determining the channel status bit value.

In the illustrated case of FIG 6, it is assumed that the first frequency band has less measuring points than the second frequency band. In the opposite case, i.e. if the reference point is set such that more measuring points are defined in the first frequency band than in the second frequency band, the process is easily performed with a slight modification to steps 628 to 630.

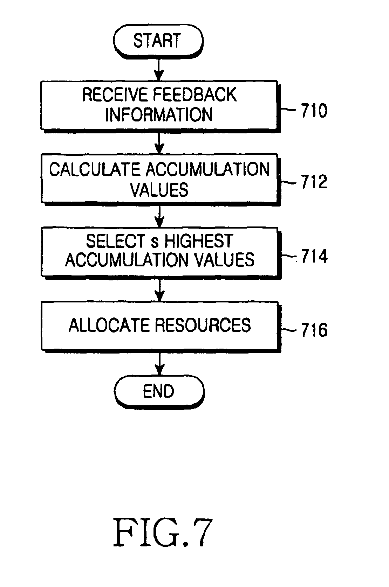

FIG 7 is a flowchart illustrating a control operation for resource allocation in the BS according to the first embodiment of the present invention.

Referring to FIG 7, the BS receives feedback information from an MS and acquires the channel status bit value of every measuring point from the feedback information in step 710.

In step 712, for each measuring point, the BS calculates the accumulation value of the channel status bit values from the reference point to the measuring point in the first and second frequency bands defined by the reference point, separately.

The BS selects 's' accumulation values starting from the highest accumulation value in step 714. 's' may be determined according to the amount of resources requested by the MS. The BS allocates resources corresponding to the 's' accumulation values to the MS in step 716. The resources can be defined by subchannels or subcarriers.

The BS notifies the MS of the allocated resources and then terminates the resource allocation procedure.

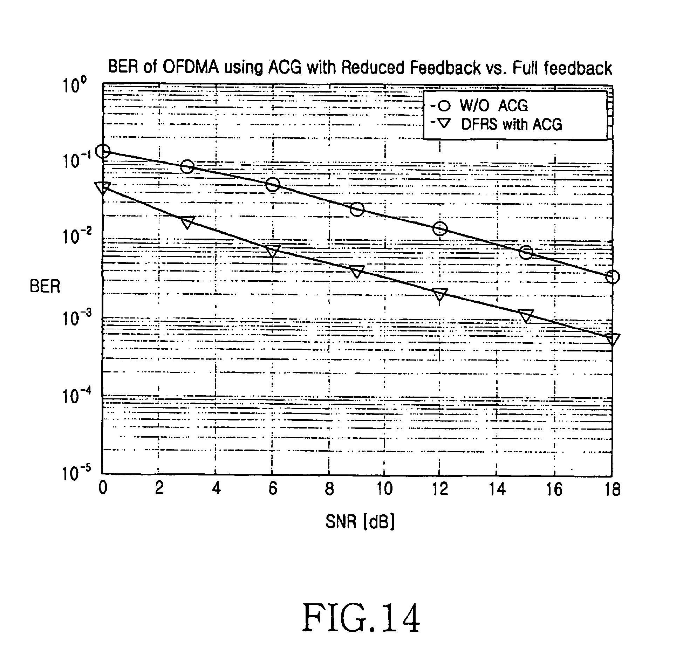

FIG 14 is a graph comparing the first embodiment of the present invention with a resource allocation without ordering. As noted from FIG 14, resource allocation according to the present invention outperforms the resource allocation without ordering by about 6dB.

The second embodiment of the present invention is characterized in that the channel status bit values or accumulation values of each measuring point acquired from a plurality of pieces of feedback information are averaged, and resources are allocated according to the averages. Therefore, errors in the channel status bit values of measuring points can be reduced by a diversity gain.

The plurality of pieces of feedback information are feedback information received at a current time T and the previous time (T-1). The points of time (T-1) and T are determined according to a feedback information report period. The channel status bit values of measuring points are determined in the same manner as in the first embodiment described before. Therefore, the following description focuses on resource allocation based on feedback information in a BS.

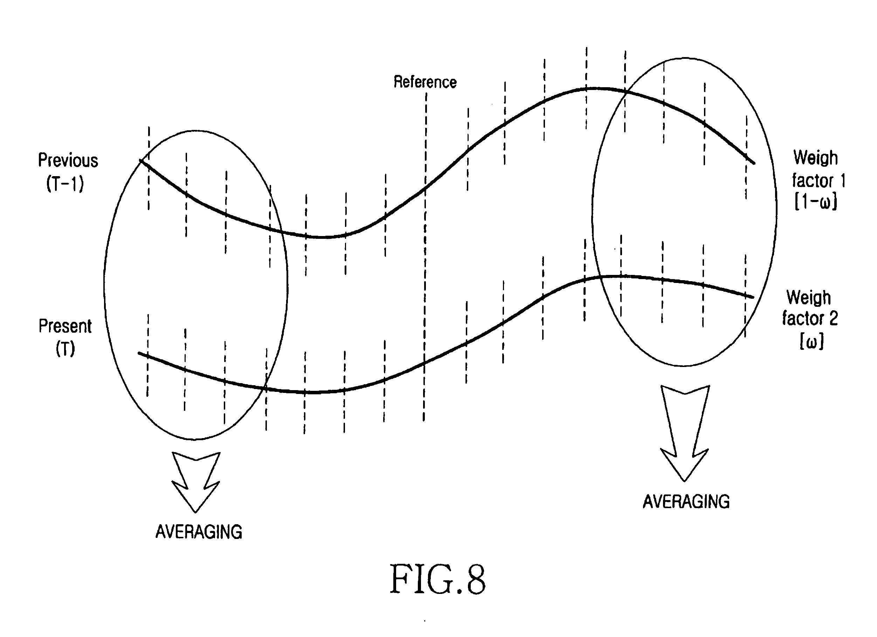

FIG 8 illustrates resource allocation based on the average of feedback information received at a plurality of points of time according to the second embodiment of the present invention. While resource allocation is carried out based on successively received two pieces of feedback information in the illustrated case of FIG 8, it is clear that more pieces of feedback information can be used.

Referring to FIG 8, the BS calculates channel status bit values for measuring points based on feedback information received at time (T-1), and also calculates channel status bit values for measuring points based on feedback information received at time T, in the same manner as in the first embodiment of the present invention.

The BS averages the channel status bit values of each measuring point calculated at time (T-1) and time T. Alternatively, the BS may average the accumulation values of each measuring point. The following description is made in the context of averaging the channel status bit values.

The BS determines resources to be allocated according to the averages. Specifically, the BS selects frequency bands for an MS in a descending order of the averages and allocates them to the MS.

Meanwhile, the BS may apply different weight factors to the different reception points of time in order to differentiate weight factors according to the reliability of feedback information received at the different points of time. For example, the channel status bit values at time (T-1) may be weighted heavier than those at time T. In FIG 8, the channel status bit values at time (T-1) and at time T are weighted with weight factors (1-$\omega$) and $\omega$, respectively, and the sum of the weight factors is 1.

A measuring point farther from a reference point has a higher error probability. Thus, the averaging operation is performed partially, i.e. only on the channel status bit values of measuring points with high error probability rather than on those of all measuring points, as illustrated in FIG. 8.

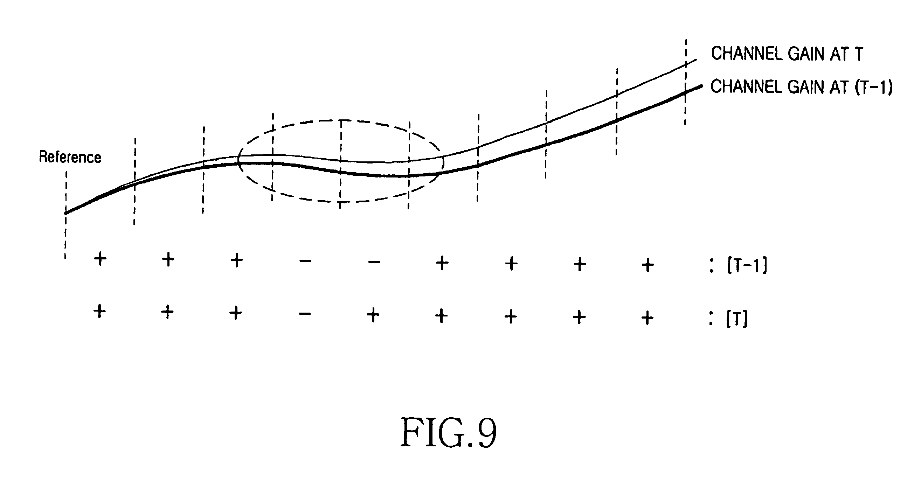

FIG 9 is a diagram illustrating improvement of channel gain through averaging of feedback information. One of two frequency bands defined by the reference point is shown in FIG 9.

Referring to FIG 9, there exist errors in channel gain at some measuring points of time (T-1) and time T. The channel status bit values at time (T-1) are "+1, +1, +1, -1, -1, +1, +1, +1, +1", and the channel status bit values at time T are "+ 1, + 1, +1, -1, +1, +1, +1, +1, +1".

The BS receives the channel status bit values at time (T-1) and time T and averages the channel status bit values on a measuring point basis. Thus, the BS can allocate resources, taking into account errors between the channel gain waveforms of time (T-1) and time T.

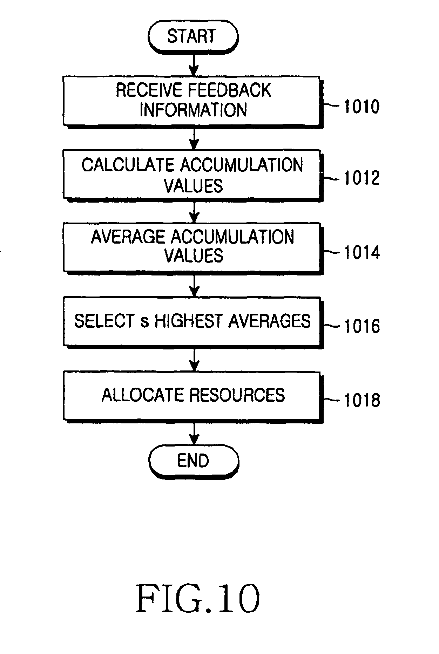

FIG 10 is a flowchart illustrating a control operation for resource allocation in the BS according to the second embodiment of the present invention. The BS characteristically allocates resources based on the averages of accumulation values.

Referring to FIG 10, the BS receives feedback information from an MS and acquires the channel status bit value of every measuring point from the feedback information in step 1010.

In step 1012, for each measuring point, the BS calculates the accumulation value of the channel status bit values from the reference point to the measuring point.

For each measuring point, the BS then averages the accumulation value calculated from the previously received feedback information and the calculated accumulation value in step 1014.

The BS selects 's' averages starting from the highest average in step 1016. 's' may be determined according to the amount of resources requested by the MS. The BS allocates resources corresponding to the 's' averages to the MS in step 1018. The resources can be defined by subchannels or subcarriers.

The BS notifies the MS of the allocated resources and then terminates the resource allocation procedure.

While the second embodiment of the present invention is implemented based on feedback information generated according to the first embodiment of the present invention, it is also applicable using conventional feedback information.

In accordance with a third embodiment of the present invention, an MS calculates a channel gain difference between every measuring point pair and averages the channel gain differences. The MS then feeds back the channel gain error average together with the channel status bit values of the measuring points. Therefore, the size of the feedback information is increased by the amount of information representing the channel gain error average. The channel gain error average is calculated separately for the first and second frequency bands divided by the reference point. Each channel gain error average is represented in 3 bits, and thus an additional 6 bits are used compared to the first embodiment of the present invention. Hereinafter, the channel gain error averages for the first and second frequency bands are referred to as a first channel gain error average and a second channel gain error average, respectively.

Therefore, a BS can estimate the channel status of the MS more accurately based on the channel status bit values and the channel gain error averages, and thus allocate resources to the MS in an optimum way.

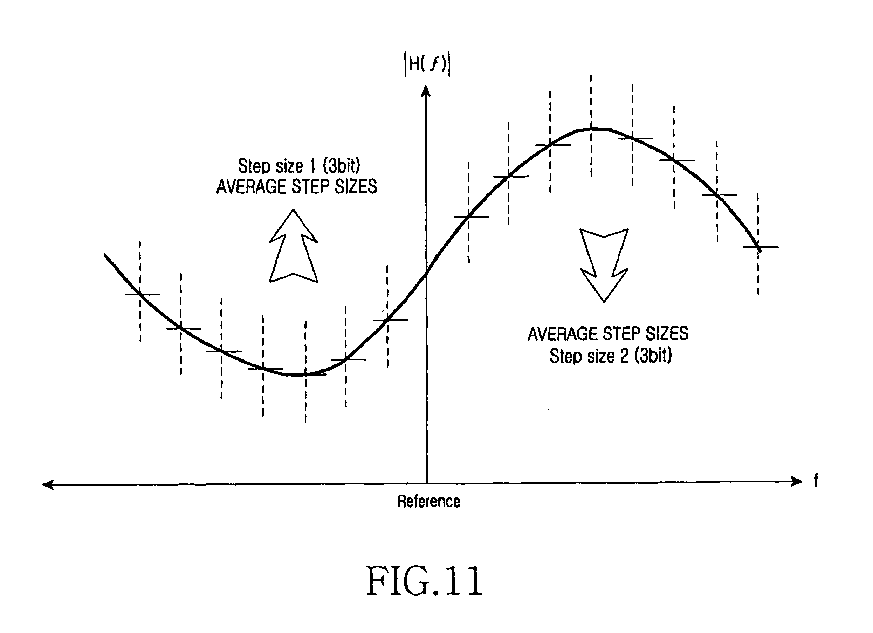

FIG 11 illustrates the principle of the third embodiment of the present invention.

Referring to FIG 11, the MS determines a channel status bit value for each measuring point in the same manner as in the first embodiment of the present invention and calculates the error between the channel gains of each measuring point and the previous measuring point.

The MS averages the channel gain errors in the first frequency band, thereby producing the first channel gain error. The MS averages the channel gain errors in the second frequency band, thereby producing the second channel gain error. The first and second channel gain error averages are represented in 3 bits each.

The MS feeds back the first and second channel gain error averages and the channel status bit values to the BS.

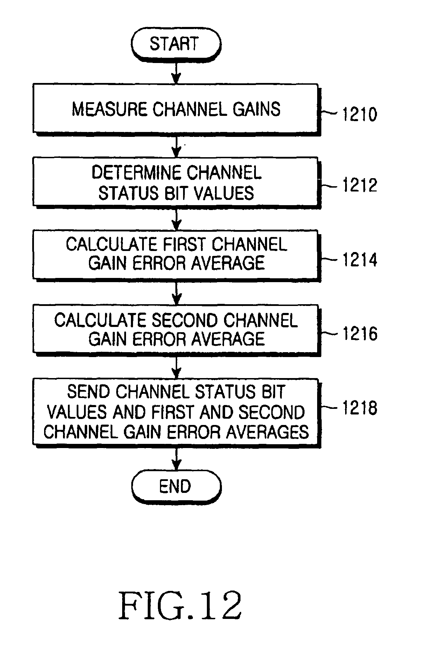

FIG 12 is a flowchart illustrating an operation for sending feedback information in the MS according to the third embodiment of the present invention.

Referring to FIG 12, the MS measures channel gains over the total frequency band in step 1210 and determines channel status bit values for the measuring points distributed across the total frequency band in step 1212. The channel status bit values may be determined in accordance with the first embodiment of the present invention.

In step 1214, the MS calculates a channel gain error $H_{variation\#1}$ between two adjacent measuring points, i.e. first and second measuring points in the first frequency band by

$$H_{var\,iation\#1} = \left| H(f_T) - H(f_{T-1}) \right|$$

$$. \, . \, . \, . \, . \, (1)$$

where $H(f_T)$ denotes the channel gain of the current measuring point (i.e. the first measuring point) and $H(f_{T-1})$ denotes the channel gain of the previous measuring point (i.e. the second measuring point).

The MS then calculates the average of channel gain errors for the measuring points in the first frequency band, thereby producing a first channel gain error average $H_{average\#1}$.

In step 1216, the MS calculates a channel gain error $H_{variation\#1}$ between two adjacent measuring points, i.e. first and second measuring points in the second frequency band by

$$H_{var\,iation\#2} = \left| H(f_T) - H(f_{T-1}) \right|$$

$$. \, . \, . \, . \, . \, (2)$$

where $H(f_T)$ denotes the channel gain of the current measuring point (i.e. the first measuring point) and $H(f_{T-1})$ denotes the channel gain of the previous measuring point (i.e. the second measuring point).

The MS then calculates the average of channel gain errors for the measuring points in the second frequency band, thereby producing a second channel gain error average $H_{average\#2}$.

In step 1218, the MS sends the channel status bit values and the first and second channel gain error averages $H_{average\#1}$ and $H_{average\#2}$ as feedback information to the BS.

Therefore, the BS can decide from the channel status bit values as to whether the channel gain at the current measuring point has increased from that at the previous measuring point. In the case of a channel gain decrease, the BS calculates the current channel gain by subtracting a channel gain error average from the previous channel gain. In the case of a channel gain increase, the BS calculates the current channel gain by adding the channel gain error average to the previous channel gain. As stated before, the channel gain error average is different in the first and second frequency bands.

As described above, the BS can estimate the channel gain of the MS more accurately and thus allocate resources more efficiently to the MS.

A description will be made of resource allocation taking into account an estimated channel status.

The present invention proposes two resource allocation methods. One is to allocate resources in a random order and the other is to allocate resources in the order from the worst to the best channel status.

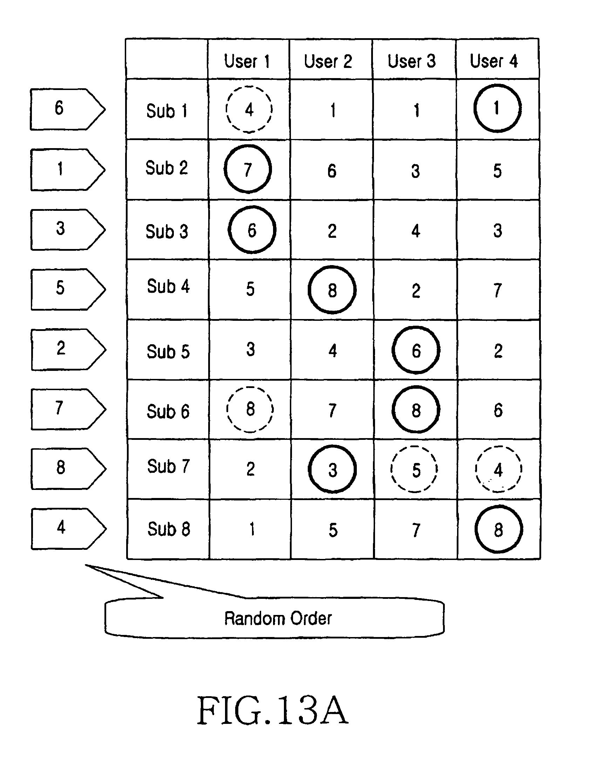

FIG 13A illustrates resource allocation to a plurality of MSs in a random order. In the illustrated case of FIG 13A, eight subchannels are allocated to four MSs, two subchannels per MS and the accumulation values of the subchannels are already calculated for each MS using feedback information. Numerals at the leftmost side in FIG 13A denote a randomly decided resource allocation order.

Referring to FIG 13A, the BS checks the accumulation values of the MSs for a second subchannel (Sub 2) and Sub 2 is allocated to an MS having the highest accumulation value, thus, Sub 2 is allocated to the first MS (User 1) with an accumulation value of 7. The highest accumulation value is equivalent to the highest channel gain (i.e. the best channel status).

Subsequently, for a fifth subchannel (Sub 5), the BS selects a third MS (User 3) with the highest accumulation value and allocates Sub 5 to User 3. In this manner, a third subchannel (Sub 3) is allocated to a first MS (User 1), an eighth subchannel (Sub 8) is allocated to a fourth MS (User 4), and a fourth subchannel (Sub 4) is allocated to a second MS (User 2).

While a first subchannel (Sub 1) is supposed to be allocated to User 1 having the highest accumulation value for Sub 1, User 1 already has two subchannels, Sub 2 and Sub 3. Thus, the BS allocates Sub 1 to an MS with the second highest accumulation value for Sub 1. However, since the other MSs than User 1 have the same accumulation value, the BS allocates Sub 1 to an MS which is not allocated two subchannels. In the presence of a plurality of MSs without two subchannels, the BS selects one of them and allocates Sub 1 to the selected MS. In FIG 13A, Sub 1 is allocated to User 4.

The BS then allocates a sixth subchannel (Sub 6) to User 3 because Sub 6 is supposed to be allocated to User 1 but User 1 already has two subchannels. For the same reason, the BS finally allocates a seventh subchannel (Sub 7) to User 2, instead of User 3 or User 4.

As a consequence, Sub 2 and Sub 3 are allocated to User 1, Sub 4 and Sub 7 to User 2, Sub 5 and Sub 6 to User 3, and Sub 1 and Sub 8 to User 4.

As described above, the BS orders the subchannels randomly and allocates the subchannels to MSs having the highest accumulation values for the subchannels. If an MS is supposed to be allocated a subchannel and already has necessary resources allocated, the subchannel is allocated to another MS with the second highest accumulation value for the subchannel. In this way, the BS allocates the subchannels according to the accumulation values of the MSs and the number of current subchannels allocated to the MSs.

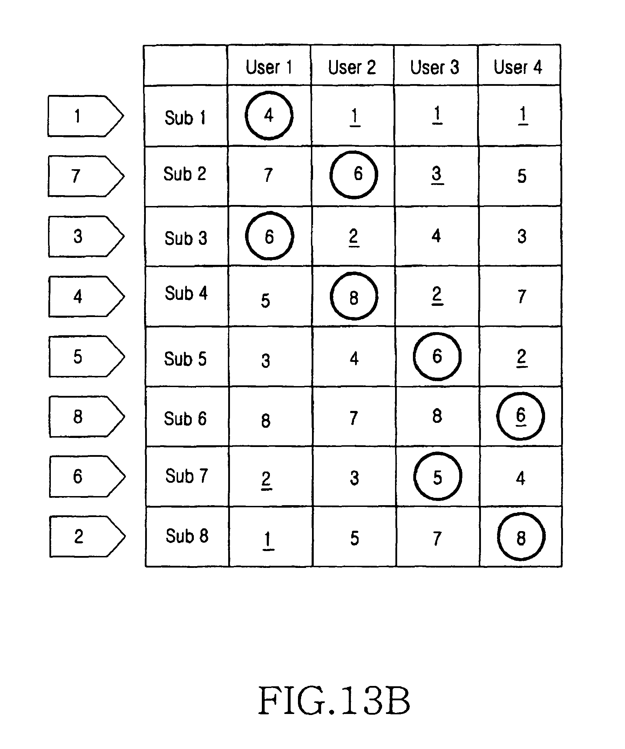

FIG 13B illustrates resource allocation based on resource ordering.

Resources are ordered according to the accumulations of the MSs for the subchannels. Specifically, the lowest accumulation value for each subchannel is selected and the subchannels are ordered for allocation according to the lowest accumulation values.

Referring to FIG 13B, the lowest accumulation values for the subchannels and a resource allocation order determined according to the lowest accumulation values are listed in Table 3 below.

(Table 3)

| Subchannel | Lowest accumulation value | Resource allocation order |
|---|---|---|
| Sub I | 1 | 1 |
| Sub 2 | 3 | 7 |
| Sub 3 | 2 | 3 |
| Sub 4 | 2 | 4 |
| Sub 5 | 2 | 5 |
| Sub 6 | 6 | 8 |
| Sub 7 | 2 | 6 |

(continued)

| Subchannel | Lowest accumulation value | Resource allocation order |
|---|---|---|
| Sub 8 | 1 | 2 |

The BS allocates the subchannels to MSs in the resource allocation order specified in Table 3. As done in FIG 13A, the subchannels are allocated to the MSs having the highest accumulation values for the subchannels.

As a consequence, Sub 1 and Sub 3 are allocated to User 1, Sub 2 and Sub 4 to User 2, Sub 5 and Sub 7 to User 3, and Sub 6 and Sub 8 to User 4.

With resource ordering for allocation, each MS can be kept in a better channel status, compared to random resource ordering.

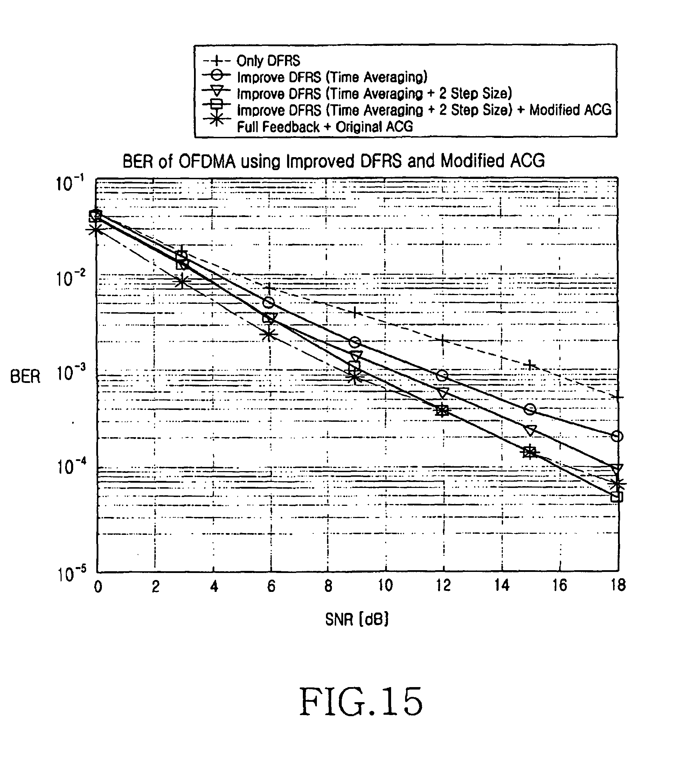

FIG 15 illustrates the simulation results of the embodiments of the present invention.

Referring to FIG 15, a simulation was performed under the conditions of Quadrature Phase Shift Keying (QPSK), 512 subcarriers, 64 subchannels each having 8 subcarriers, and 16 MSs. As noted from the graph, the embodiments of the present invention improve resource allocation performance.

As described above, the present invention advantageously reduces the amount of feedback information and compensates for the resulting performance degradation. Also, a simplified resource allocation leads to an increase in actual transmission efficiency.

While the invention has been shown and described with reference to certain preferred embodiments thereof, it will be understood by those skilled in the art that various changes in form and details may be made therein without departing from the scope of the invention as defined by the appended claims.

## Claims

1. A method of transmitting feedback information performed by a mobile station (112,114) in a mobile communication system, comprising:

    dividing a total frequency band into a first frequency band and a second frequency band with respect to a frequency being set as a reference point;
    measuring (510,1210) channel gains at channel status measuring points in the first and second frequency bands;
    determining (512,1212) channel status bit values for the channel status measuring points according to channel gain changes at the channel status measuring points; and
    reporting (514,1218) the channel status bit values as feedback information to a base station (110).

2. The method of claim 1, wherein each of the channel gain changes are determined by comparing the channel gain of each channel status measuring point with the channel gain of a previous channel status measuring point.

3. The method of claim 1, wherein the channel status measuring points are set on a subchannel basis in the first and second frequency bands.

4. The method of claim 1, further comprising:

    separately calculating channel gain differences for the channel status measuring points according to the channel gain changes at the channel status measuring points in the first and second frequency bands, and separately averaging (1214,1216) the channel gain differences in the first and second frequency bands; and
    reporting (1218) the channel gain difference averages of the first and second frequency bands as feedback information to the base station.

5. A method of allocating resources performed by a base station (110) in a mobile communication system, comprising:

    receiving (710, 1010) channel status bit values of channel status measuring points from a mobile station (112,114);
    dividing a total frequency band into a first frequency band and a second frequency band with respect to a frequency being set as a reference point, and separately calculating (712,1012) the accumulation value of channel status bit values at each of the channel status measuring points in the first and second frequency bands; and

allocating (716,1018) resources in a descending order of the accumulation values,

wherein the accumulation value is calculated by summing the channel status bit value of at least one channel status measuring point between the reference point and the each channel status measuring point, and adding the channel status bit value of the each channel status measuring point to the sum.

6. The method of claim 5, wherein each of the channel status bit values is one of +1 and -1.

7. The method of claim 5, wherein the channel status bit value of the reference point does not affect the accumulation values.

8. The method of claim 5, wherein the reception step further comprises receiving the channel status bit values of the channel status measuring points during a predetermined transmission period.

9. The method of claim 8, further comprising calculating (1014) the average of channel status bit values of each of the channel status measuring point received during a predetermined number of transmission periods and accumulating the averages.

10. The method of claim 8, further comprising:

calculating (1016) the average of accumulation values of each of the channel status measuring points over a predetermined number of transmission periods; and
allocating (1018) the resources according to the averages.

11. The method of claim 8, further comprising weighting channel status bit values received during different transmission periods with different weight factors.

12. The method of claim 10, further comprising weighting accumulation values calculated during different transmission periods with different weight factors.

13. The method of claim 5, wherein the channel status measuring points are set on a subchannel basis in the first and second frequency bands.

14. The method of claim 13, wherein the resource allocation step further comprises:

selecting (714) a mobile station (112,114) having the highest accumulation value for each subchannel;
allocating the subchannel to the selected mobile station if resource allocation is not completed for the selected mobile station; and
allocating the subchannel to a mobile station having the second highest accumulation value for the subchannel if resource allocation is completed for the selected mobile station (112,114).

15. The method of claim 14, wherein the resource allocation step further comprises randomly ordering the subchannels for allocation.

16. The method of claim 13, wherein the resource allocation step further comprises:

selecting the lowest accumulation value for each subchannel and determining a resource allocation order according to the lowest accumulation value for each subchannel;
selecting a mobile station having the highest accumulation value for each subchannel according to the resource allocation order;
allocating the subchannel to the selected mobile station if resource allocation is not completed for the selected mobile station; and
allocating the subchannel to a mobile station having the second highest accumulation value for the subchannel if resource allocation is completed for the selected mobile station.

17. The method of claim 16, wherein the resource allocation order determining step further comprises ordering subchannels in an ascending order of the lowest accumulation value for each subchannel so that a subchannel with a smaller lowest accumulation value is allocated earlier.

**Patentansprüche**

1. Verfahren zum Übertragen von Rückkoppelungsinformation durch einen mobilen Teilnehmer (112, 114) in einem Mobilkommunikationssystem, wobei das Verfahren folgende Schritte umfasst:

    Teilen eines Gesamtfrequenzbandes in ein erstes Frequenzband und ein zweites Frequenzband hinsichtlich einer Frequenz, die als Bezugspunkt festgelegt ist;
    Messen (510, 1210) von Kanalverstärkungen an Kanalstatusmesspunkten in den ersten und zweiten Frequenzbändern;
    Bestimmen (512, 1212) von Kanalstatusbitwerten für die Kanalstatusmesspunkte entsprechend von Kanalverstärkungsänderungen an den Kanalstatusmesspunkten; und
    Berichten (514, 1218) der Kanalstatusbitwerte als Rückkoppelungsinformation an eine Basisstation (110).

2. Verfahren nach Patentanspruch 1, wobei jede der Kanalverstärkungsänderungen durch Vergleichen der Kanalverstärkung eines jeden Kanalstatusmesspunktes mit der Kanalverstärkung eines vorherigen Kanalstatusmesspunktes bestimmt wird.

3. Verfahren nach Patentanspruch 1, wobei die Kanalstatusmesspunkte auf einer untergeordneten Kanalbasis in den ersten und zweiten Frequenzbändern festgelegt sind.

4. Verfahren nach Patentanspruch 1, weiterhin umfassend:

    getrenntes Berechnen von Kanalverstärkungsunterschieden für die Kanalstatusmesspunkte entsprechend der Kanalverstärkungsänderungen an den Kanalstatusmesspunkten in den ersten und zweiten Frequenzbändern, und getrennte Durchschnittsbildung (1214, 1216) der Kanalverstärkungsunterschiede in den ersten und zweiten Frequenzbändern; und
    Berichten (1218) der Durchschnitte der Kanalverstärkungsunterschiede der ersten und zweiten Frequenzbänder als Rückkoppelungsinformation an die Basisstation.

5. Verfahren zum Zuordnen von Ressourcen durch eine Basisstation (110) in einem Mobilkommunikationssystem, wobei das Verfahren folgende Schritte umfasst:

    Empfangen (710, 1010) von Kanalstatusbitwerten von Kanalstatusmesspunkten von einem mobilen Teilnehmer (112, 114);
    Teilen eines Gesamtfrequenzbandes in ein erstes Frequenzband und ein zweites Frequenzband hinsichtlich einer Frequenz, die als ein Bezugspunkt festgelegt ist, und getrenntes Berechnen (712, 1012) des Summenwertes der Kanalstatusbitwerte an jedem der Kanalsstatusmesspunkte in den ersten und zweiten Frequenzbändern; und
    Zuordnen (716,1018) von Ressourcen in einer absteigenden Reihenfolge der Summenwerte,
    wobei der Summenwert durch Summieren des Kanalstatusbitwertes von mindestens einem Kanalstatusmesspunkt zwischen dem Bezugspunkt und jedem Kanalstatusmesspunkt berechnet wird und Addieren des Kanalstatusbitwertes von jedem Kanalstatusmesspunkt zu der Summe.

6. Verfahren nach Patentanspruch 5, wobei jeder der Kanalstatusbitwerte ein Wert von +1 und -1 ist.

7. Verfahren nach Patentanspruch 5, wobei der Kanalstatusbitwert des Bezugspunktes die Summenwerte nicht beeinflusst.

8. Verfahren nach Patentanspruch 5, wobei der Empfangsschritt weiterhin einen Schritt des Empfangens der Kanalstatusbitwerte der Kanalstatusmesspunkte während einer vorbestimmten Übertragungsperiode umfasst.

9. Verfahren nach Patentanspruch 8, weiterhin umfassend einen Schritt des Berechnens (1014) des Durchschnitts von Kanalstatusbitwerten von jedem der Kanalstatusmesspunkte, die während einer vorbestimmten Anzahl von Übertragungsperioden empfangen wurden, und Berechnen der Durchschnitte.

10. Verfahren nach Patentanspruch 8, weiterhin umfassend die Schritte:

    Berechnen (1016) des Durchschnitts von Summenwerten von jedem der Kanalstatusmesspunkte über eine vorbestimmte Anzahl von Übertragungsperioden; und

Zuordnen (1018) der Ressourcen entsprechend der Durchschnitte.

11. Verfahren nach Patentanspruch 8, weiterhin umfassend den Schritt des Gewichtens von Kanalstatusbitwerten, die während unterschiedlichen Übertragungsperioden mit unterschiedlichen Gewichtungsfaktoren empfangen wurden.

12. Verfahren nach Patentanspruch 10, weiterhin umfassend einen Schritt des Gewichtens von Summenwerten, die während unterschiedlichen Übertragungsperioden mit unterschiedlichen Gewichtungsfaktoren berechnet wurden.

13. Verfahren nach Patentanspruch 5, wobei die Kanalstatusmesspunkte auf untergeordneter Kanalbasis in den ersten und zweiten Frequenzbändern festgelegt sind.

14. Verfahren nach Patentanspruch 13, wobei der Schritt des Zuordnens von Ressourcen weiterhin umfasst:

Auswählen (714) eines mobilen Teilnehmers (112, 114) mit dem höchsten Summenwert für jeden untergeordneten Kanal;

Zuordnen des untergeordneten Kanals zu dem ausgewählten mobilen Teilnehmer, wenn eine Ressourcenzuordnung für den ausgewählten mobilen Teilnehmer nicht abgeschlossen wurde; und

Zuordnen des untergeordneten Kanals zu einen mobilen Teilnehmer mit dem zweithöchsten Summenwert für den untergeordneten Kanal, wenn eine Ressourcenzuordnung für den ausgewählten mobilen Teilnehmer (112, 114) abgeschlossen wurde.

15. Verfahren nach Patentanspruch 14, wobei der Schritt des Ressourcenzuordnens weiterhin das zufällige Anordnen der untergeordneten Kanäle für eine Zuordnung umfasst.

16. Verfahren nach Patentanspruch 13, wobei der Schritt des Ressourcenzuordnens weiterhin umfasst:

Auswählen des kleinsten Summenwertes für jeden untergeordneten Kanal und Bestimmen einer Ressourcenzuordnungsreihenfolge entsprechend des niedrigsten Summenwertes für jeden untergeordneten Kanal;

Auswählen eines mobilen Teilnehmers mit dem höchsten Summenwert für jeden untergeordneten Kanal entsprechend der Ressourcenzuordnungsreihenfolge;

Zuordnen des untergeordneten Kanals zu dem ausgewählten mobilen Teilnehmer, wenn die Ressourcenzuordnung für den ausgewählten mobilen Teilnehmer nicht abgeschlossen wurde; und

Zuordnen des untergeordneten Kanals zu einen mobilen Teilnehmer mit dem zweithöchsten Summenwert für den untergeordneten Kanal, wenn die Ressourcenzuordnung für den ausgewählten mobilen Teilnehmer abgeschlossen wurde.

17. Verfahren nach Patentanspruch 16, wobei der Schritt des Bestimmens der Ressourcenzuordnungsreihenfolge weiterhin eine Sortierung von untergeordneten Kanälen in einer absteigenden Reihenfolge des niedrigsten Summenwertes für jeden untergeordneten Kanal umfasst, so dass ein untergeordneter Kanal mit einem kleineren niedrigsten Summenwert früher zugeordnet wird.

**Revendications**

1. Procédé d'émission d'informations de contre-réaction, mis en oeuvre par une station mobile (112, 114), dans un système de communication mobile, comprenant les étapes consistant à :

diviser une bande totale de fréquences en une première bande de fréquences et une seconde bande de fréquences, par rapport à une fréquence fixée comme point de référence ;

mesurer (510, 1210) des gains de canal à des points de mesure de l'état du canal dans les première et seconde bandes de fréquences ;

déterminer (512, 1212) des valeurs binaires d'état du canal pour les points de mesure de l'état du canal, en fonction des variations du gain du canal aux points de mesure de l'état du canal ; et

rapporter (514, 1218) à une station de base (110), en tant qu'informations de contre-réaction, les valeurs binaires d'état du canal.

2. Procédé selon la revendication 1, dans lequel chacune des variations du gain de canal est déterminée en comparant le gain de canal de chaque point de mesure de l'état du canal avec le gain de canal d'un point de mesure de l'état du canal précédent.

**3.** Procédé selon la revendication 1, dans lequel les points de mesure de l'état du canal sont fixés au niveau des sous-canaux dans les première et seconde bandes de fréquences.

**4.** Procédé selon la revendication 1, comprenant en outre les étapes consistant à :

calculer séparément des différences de gain de canal pour les points de mesure de l'état du canal, en fonction des variations du gain de canal aux points de mesure de l'état du canal dans les première et seconde bandes de fréquences, et faire des moyennes séparées (1214, 1216) des différences de gain de canal dans les première et seconde bandes de fréquences ; et
rapporter (1218) à la station de base, en tant qu'informations de contre-réaction, les moyennes de différences de gain de canal des première et seconde bandes de fréquences.

**5.** Procédé d'attribution de ressources, mis en oeuvre par une station de base (110) dans un système de communication mobile, comprenant les étapes consistant à :

recevoir (710, 1010) d'une station mobile (112, 114) des valeurs binaires d'état du canal de points de mesure de l'état du canal ;
diviser une bande totale de fréquences en une première bande de fréquences et une seconde bande de fréquences, par rapport à une fréquence fixée comme point de référence, et calculer séparément (712, 1012) la valeur cumulée des valeurs binaires d'état du canal de chacun des points de mesure de l'état du canal dans les première et seconde bandes de fréquences ; et
attribuer (716, 1018) des ressources dans un ordre descendant des valeurs cumulées ;
la valeur cumulée étant calculée en additionnant la valeur binaire d'état du canal d'au moins un point de mesure de l'état du canal entre le point de référence et chacun des points de mesure de l'état du canal, et en additionnant la valeur binaire d'état du canal de chaque point de mesure de l'état du canal à la somme.

**6.** Procédé selon la revendication 5, dans lequel chacune des valeurs binaires d'état du canal est soit +1, soit -1.

**7.** Procédé selon la revendication 5, dans lequel la valeur binaire d'état du canal du point de référence n'affecte pas les valeurs cumulées.

**8.** Procédé selon la revendication 5, dans lequel l'étape de réception comprend en outre l'étape consistant à recevoir les valeurs binaires d'état du canal des points de mesure de l'état du canal pendant une période d'émission prédéterminée.

**9.** Procédé selon la revendication 8, comprenant en outre les étapes consistant à calculer (1014) la moyenne des valeurs binaires d'état du canal de chaque point de mesure de l'état du canal reçues pendant un nombre prédéterminé de périodes d'émission et à cumuler les moyennes.

**10.** Procédé selon la revendication 8, comprenant en outre les étapes consistant à :

calculer (1016) la moyenne des valeurs cumulées de chacun des points de mesure de l'état du canal sur un nombre prédéterminé de périodes d'émission ; et
attribuer (1018) les ressources en fonction des moyennes.

**11.** Procédé selon la revendication 8, comprenant en outre l'étape consistant à pondérer les valeurs binaires d'état du canal reçues pendant différentes périodes d'émission à l'aide de différents facteurs de pondération.

**12.** Procédé selon la revendication 10, comprenant en outre l'étape consistant à pondérer les valeurs cumulées calculées pendant différentes périodes d'émission à l'aide de différents facteurs de pondération.

**13.** Procédé selon la revendication 5, dans lequel les points de mesure de l'état du canal sont fixés au niveau des sous-canaux dans les première et seconde bandes de fréquences.

**14.** Procédé selon la revendication 13, dans lequel l'étape d'attribution de ressources comprend en outre les étapes consistant à :

sélectionner (714) une station mobile (112, 114) ayant la valeur cumulée la plus élevée pour chaque sous-canal ;
attribuer le sous-canal à la station mobile sélectionnée si l'attribution des ressources n'est pas achevée pour la station mobile sélectionnée ; et
attribuer le sous-canal à la station mobile ayant la seconde valeur cumulée la plus élevée pour le sous-canal si l'attribution des ressources est achevée pour la station mobile sélectionnée (112, 114).

15. Procédé selon la revendication 14, dans lequel l'étape d'attribution de ressources comprend en outre l'étape consistant à reclasser aléatoirement les sous-canaux pour leur attribution.

16. Procédé selon la revendication 13, dans lequel l'étape d'attribution de ressources comprend en outre les étapes consistant à :

sélectionner la valeur cumulée la plus faible pour chaque sous-canal et déterminer un ordre d'attribution des ressources en fonction de la valeur cumulée la plus faible pour chaque sous-canal ;
sélectionner une station mobile ayant la valeur cumulée la plus élevée pour chaque sous-canal, sur la base de l'ordre d'attribution des ressources ;
attribuer le sous-canal à la station mobile sélectionnée si l'attribution des ressources n'est pas achevée pour la station mobile sélectionnée ; et
attribuer le sous-canal à la station mobile ayant la seconde valeur cumulée la plus élevée pour le sous-canal si l'attribution des ressources est achevée pour la station mobile sélectionnée.

17. Procédé selon la revendication 16, dans lequel l'étape de détermination de l'ordre d'attribution des ressources comprend en outre l'étape consistant à reclasser les sous-canaux dans un ordre ascendant de la valeur cumulée la plus faible pour chaque sous-canal, si bien qu'un sous-canal ayant une valeur cumulée la plus faible qui est inférieure reçoit son attribution auparavant.

FEEDBACK BACK INFORMATION

TRAFFIC

FIG.1

FIG.2

|     | #1 | #2 | #3 | #4 | #5 | #6 | #7 | #8 |
|-----|----|----|----|----|----|----|----|----|
| User 1 (3) | <u>1</u> | <u>2</u> | <u>4</u> | 5 | 8 | 7 | 6 | 3 |
| User 2 (3) | 8 | 7 | 3 | <u>2</u> | <u>1</u> | <u>6</u> | 5 | 4 |
| User 3 (2) | 3 | 4 | 5 | 8 | 7 | 6 | <u>2</u> | <u>1</u> |

## FIG.3A

|     | #1 | #2 | #3 | #4 | #5 | #6 | #7 | #8 |
|-----|----|----|----|----|----|----|----|----|
| User 1 (3) | 1 | 1 | 1 | 0 | 0 | 0 | 0 | 0 |
| User 2 (3) | 0 | 0 | 0 | 1 | 1 | 1 | 0 | 0 |
| User 3 (2) | 0 | 0 | 0 | 0 | 0 | 0 | 1 | 1 |

## FIG.3B

FIG.4

EP 1 740 006 B1

FIG.5

```
                          ┌─────────┐
                          │  START  │
                          └─────────┘
                               │
                               ▼
              ┌──────────────────────────────┐
              │          i, k ← N             │──── 610
              └──────────────────────────────┘
                               │
      ┌────────────────────────┤
      │                        ▼
      │    YES          ╱──────────────╲ ─── 612
      │  ┌─────────────│ |H(ƒᵢ)| < |H(ƒᵢ₋₁)| │
      │  │              ╲      ?       ╱
      │  │               ╲─────────────╱
      │  │                     │ NO
      │  ▼                     ▼
  ┌─────────────┐       ┌─────────────────┐
  │ bᵢ₋₁ , ← +1 │──614  │   bᵢ₋₁ , ← −1    │──── 616
  └─────────────┘       └─────────────────┘
      │                        │
      └────────────┐  ┌────────┘
                   ▼  ▼
      ┌────────────────────────┤
      │                        ▼
      │    YES          ╱──────────────╲ ─── 618
      │  ┌─────────────│ |H(ƒₖ)| < |H(ƒₖ₋₁)| │
      │  │              ╲      ?       ╱
      │  │               ╲─────────────╱
      │  │                     │ NO
      │  ▼                     ▼
  ┌─────────────┐       ┌─────────────────┐
  │ bₖ₊₁ , ← +1 │──622  │  bₖ₊₁, k ← −1   │──── 624
  └─────────────┘       └─────────────────┘
      │                        │
      └────────────┐  ┌────────┘
                   ▼  ▼
              ┌──────────────────┐
              │     i ← i−1        │──── 626
              │     k ← k+1        │
              └──────────────────┘
                        │
                        ▼
     YES          ╱──────────────╲ ─── 628
  ┌─────────────│     i > 1 ?      │
  │              ╲─────────────╱
  │                     │ NO
  │                     ▼
  │       ╱──────────────────────╲ ─── 630      NO
  │      │     k > Index_max?      │──────────┐
  │       ╲──────────────────────╱           │
  │                     │ YES                 │
  │                     ▼                      │
  │               ┌─────────┐                 │
  │               │   END   │                 │
  │               └─────────┘                 │
```

$$b_{i-1}, \leftarrow +1 \quad (614)$$

$$b_{i-1}, \leftarrow -1 \quad (616)$$

$$|H(f_i)| < |H(f_{i-1})| \; ? \quad (612)$$

$$|H(f_k)| < |H(f_{k-1})| \; ? \quad (618)$$

$$b_{k+1}, \leftarrow +1 \quad (622)$$

$$b_{k+1}, k \leftarrow -1 \quad (624)$$

$$i \leftarrow i-1$$
$$k \leftarrow k+1 \quad (626)$$

# FIG.6

START

RECEIVE FEEDBACK
INFORMATION — 710

CALCULATE ACCUMULATION
VALUES — 712

SELECT s HIGHEST
ACCUMULATION VALUES — 714

ALLOCATE RESOURCES — 716

END

FIG.7

FIG.8

CHANNEL GAIN AT T

CHANNEL GAIN AT (T-1)

Reference

| + | + | + | − | − | + | + | + | + | : [T-1] |

| + | + | + | − | + | + | + | + | + | : [T] |

FIG.9

EP 1 740 006 B1

START

RECEIVE FEEDBACK
INFORMATION — 1010

CALCULATE ACCUMULATION
VALUES — 1012

AVERAGE ACCUMULATION
VALUES — 1014

SELECT s HIGHEST AVERAGES — 1016

ALLOCATE RESOURCES — 1018

END

# FIG.10

$|H(f)|$

Step size 1 (3bit)
AVERAGE STEP SIZES

AVERAGE STEP SIZES
Step size 2 (3bit)

Reference

FIG.11

START

MEASURE CHANNEL GAINS — 1210

DETERMINE CHANNEL
STATUS BIT VALUES — 1212

CALCULATE FIRST CHANNEL
GAIN ERROR AVERAGE — 1214

CALCULATE SECOND CHANNEL
GAIN ERROR AVERAGE — 1216

SEND CHANNEL STATUS BIT
VALUES AND FIRST AND SECOND
CHANNEL GAIN ERROR AVERAGES — 1218

END

FIG.12

| | | User 1 | User 2 | User 3 | User 4 |
|---|---|---|---|---|---|
| 6 | Sub 1 | (4) | 1 | 1 | (1) |
| 1 | Sub 2 | (7) | 6 | 3 | 5 |
| 3 | Sub 3 | (6) | 2 | 4 | 3 |
| 5 | Sub 4 | 5 | (8) | 2 | 7 |
| 2 | Sub 5 | 3 | 4 | (6) | 2 |
| 7 | Sub 6 | (8) | 7 | (8) | 6 |
| 8 | Sub 7 | 2 | (3) | (5) | (4) |
| 4 | Sub 8 | 1 | 5 | 7 | (8) |

Random Order

# FIG.13A

| | | User 1 | User 2 | User 3 | User 4 |
|---|---|---|---|---|---|
| 1 | Sub 1 | (4) | 1 | 1 | 1 |
| 7 | Sub 2 | 7 | (6) | 3 | 5 |
| 3 | Sub 3 | (6) | 2 | 4 | 3 |
| 4 | Sub 4 | 5 | (8) | 2 | 7 |
| 5 | Sub 5 | 3 | 4 | (6) | 2 |
| 8 | Sub 6 | 8 | 7 | 8 | (6) |
| 6 | Sub 7 | 2 | 3 | (5) | 4 |
| 2 | Sub 8 | 1 | 5 | 7 | (8) |

# FIG.13B

BER of OFDMA using ACG with Reduced Feedback vs. Full feedback

FIG.14

FIG.15